# EUROPEAN PATENT APPLICATION

(11) **EP 1 915 001 A1**
(43) Date of publication of application: **23.04.2008**
(21) Application number: 07118156.4
(22) Date of filing: 09.10.2007
(51) Int. Cl.: H04Q 7/22, H04L 12/58

(54) **Short message service formatting for information exchange**

(30) Priority: 22.10.2006 US 862453 P; 19.01.2007 US 625091
(71) Applicant: Onepin, Inc., Westborough, Massachusetts 01581 (US)
(72) Inventor: Celik, Feyzi, Hopkinton, 01748 (US); Nowak, Marcin, Westborough, MA 01581 (US); Say, Burak, 06590, Ankara (TR)
(74) Representative: Crump, Julian Richard John

(57) **Abstract**

An apparatus (10) including a processor, a memory coupled to the processor including computer readable instructions (15) configured to cause the processor to send a short message service (SMS) message (16,18), wherein the SMS message includes an SMS header portion, a transmission protocol user data (TP-UD) portion including a first field followed by a break indicator, a second field followed by a comma, followed by a third field, followed by the break indicator, a fourth field followed by a colon, followed by a fifth field followed by the break indicator, a sixth field followed by the colon, followed by a seventh field, followed by the break indicator, an eighth field followed by the colon, followed by a ninth field, followed by a space character, followed by the break indicator, a tenth field followed by the break indicator, and an eleventh field.

## Description

A phonebook of a mobile device typically plays a significant role in mobile communications. The phone book is typically the source of contact information for device calls, text messages, faxes, instant messages and e-mails. One challenge in the mobile device market is inserting, updating, and maintaining contact information stored in the phonebook. Currently, a user typically manually enters another person's contact information into the user's mobile device. This takes time and is often difficult with small buttons and small screens on mobile devices, and can be prone to errors with manual data entry. Often, the result is that many individuals do not enter contact information into their mobile phonebooks.

These problems can restrict the user from adding alternate phone numbers (e.g. business device, home device, and fax) associated with a contact, even though today's phonebooks can support multiple numbers. With the growth of more sophisticated devices (e.g., Smart Devices, IP devices, and Internet capable devices) there is also a desire to store e-mail addresses and Instant Message (IM) addresses of contacts. Entering e-mail and IM addresses, however, can be even more problematic than entering phone numbers.

Another problem for users today is the inability to control the distribution of contact information to others. For example, the user might provide a mobile phone number or business telephone number to another person but not want to provide their home telephone number. Thus, users continue to face many problems in using and benefiting from the capabilities of a device phonebook.

### Summary

In general, in an aspect, the invention provides an apparatus including a processor, and a memory coupled to the processor including computer readable instructions configured to cause the processor to send a short message service (SMS) message, wherein the SMS message includes an SMS header portion, a transmission protocol user data (TP-UD) portion including a first field followed by a break indicator, a second field followed by a comma, followed by a third field, followed by the break indicator, a fourth field followed by a colon, followed by a fifth field followed by the break indicator, a sixth field followed by the colon, followed by a seventh field, followed by the break indicator, an eighth field followed by the colon, followed by a ninth field, followed by a space character, followed by the break indicator, a tenth field followed by the break indicator, and an eleventh field.

Implementations of the invention may include one or more of the following features. The SMS header portion includes a protocol identifier field, a data coding scheme field, and a destination address field. The TP-UD portion includes the space character between the third field and the break indicator. The TP-UD portion includes the space character between the fifth field and the break indicator. The TP-UD portion includes the space character between the tenth field and the break indicator. The break indicator is a new line indicator. The first, second, third, fourth, sixth, eighth, ninth, tenth, and eleventh fields are optional, wherein if any of the first, second, third, fourth, sixth, eighth, ninth, tenth, and eleventh fields are omitted, the corresponding following break indicator, if any, is also omitted.

In general, in another aspect, the invention provides an apparatus including a communication device including computer readable instructions contained on a computer readable medium configured to cause a processor to send a short message service (SMS) message, wherein the SMS message including an SMS header portion, and an information portion including at least one of a last name field, a first name field, a mobile number field, a home number field, and a work number field, wherein, if included, the last name field, the first name field, the mobile number field, the home number field, and the work number field are arranged in a predetermined configuration such that another communication device receiving the SMS message can identify a characteristic of the SMS message based on the predetermined configuration.

Implementations of the invention may provide one or more of the following features. The instructions are further configured to cause the communication device to automatically prompt a first user of the communication device to provide contact information related to the first user to a second user of the another communication device, upon completion of a communication event. A supplemental character is disposed within the information portion in a predetermined configuration such that the another communication device receiving the SMS message can identify a type of the SMS message based on a configuration of the at least one supplemental character. The communication device is configured to insert a supplemental character at a predetermined location within the information portion, the presence of the supplemental character in the information portion being indicative of a characteristic of information included in the information portion. The supplemental character is a space character. The information portion further includes an e-mail field including information indicative of an e-mail address. The first name field includes information indicative of a first name. The last name field includes information indicative of a second name. The mobile number field includes information indicative of a first telephone number. The home number field includes information indicative of a second telephone number. The work number field includes information indicative of a third telephone number. The communication device is a subscriber identity module (SIM). The communication device is a network server.

In general, in another aspect, the invention provides an apparatus including a communication device including computer readable instructions contained on a computer readable medium configured to cause a processor to send a short message service (SMS) message, wherein the SMS message includes an SMS header portion, an information portion including at least one information field selected from the group consisting of a last name field, a first name field, a mobile number field, a home number field, and a work number field, wherein respective ones of the contact information fields, if included, are represented by a tag information field including information indicative of a type of contact information included in the respective contact information fields, a length information field including information indicative of a length of contact information included in the respective contact information fields, and a value information field including information indicative of a value of the contact information included in the respective contact information fields.

Implementations of the invention may provide one or more of the following features. The instructions are further configured to cause the communication device to automatically prompt a first user of the communication device to provide contact information related to the first user to a second user of another communication device, upon completion of a communication event. The information portion further includes a toolkit application reference (TAR) value. The TAR value includes information indicative of an identity of the communication device. The TAR value includes information indicative of a type of the SMS message. The communication device is a subscriber identity module (SIM). The communication device is a network server. The information portion further includes an e-mail field including information indicative of an e-mail address.

Various aspects of the invention may provide one or more of the following capabilities. Embodiments of the invention can provide systems, methods, and communication enhancements to automatically transfer (e.g., send, insert and exchange) a caller's contact information into a user's phonebook using Short Message Service (SMS) messages. The phonebook can reside on either a universal integrated circuit card (UICC), user interface module (e.g., user interface module, subscriber identity module (SIM), USIM, Mega SIM, and/or other smart cards or integrated chips), on the mobile device or on a remote server, for example. An automatic send and insert and/or automatic exchange mechanism can be triggered when a communication happens (e.g., a device call, an SMS interaction, and/or e-mail) between two mobile devices or other devices. A caller can be asked, e.g., upon completion of a communication, if the caller wants to send the caller's contact information to a communication recipient. If yes, the information can be automatically sent to the recipient, based upon the permission settings provided by the sender and/or caller. A recipient of contact information can store the information on the recipient's device.

AutoInsert/AutoExchange may occur between two communication devices utilizing existing OnePIN™ CallerXchange technology, for example, as described in United States Patent numbers 6,374,259 and 6,654,768.

### Brief Description of the Figures

FIG. 1 is a schematic of a communication system;
FIG. 2 is a profile setup dialog;
FIGS. 3a-3b are diagrams of a profile confirmation messages;
FIG. 4 is a table including personal profile parameter information;
FIG. 5 is a diagram of a portion of an information packet;
FIG. 6 is a diagram of a portion of an information packet;
FIG. 7 is a table of information contained in a sub-portion of the information packet shown in FIG. 5 and FIG. 6;
FIG. 8 is a diagram of a portion of an information packet;
FIG. 9 is a diagram of a portion of an information packet;
FIG. 10 is a table of information contained in a sub-portion of the information packet shown in FIG. 8 and FIG. 9.
FIG. 11 is a table of information contained in a sub-portion of the information packet shown in FIG. 8 and FIG. 9;
FIG. 12 is a table including field identifiers;
FIG. 13 is a block flow diagram of a process of sharing contact information with a user of the system shown in FIG. 1; and
FIG. 14 is a block flow diagram of a process of receiving contact information from a user of the system shown in FIG. 1.

### Detailed Description

Embodiments of the invention provide techniques for inserting, exchanging and/or storing contact information in a communication device (e.g., a phone) used with a mobile network. For example, the invention can be used to transfer information using a Short Message Service (SMS) message. Upon completion of a call, the caller's phone automatically prompts the caller to send the caller information the recipient's phone. The caller is prompted to send all contact information, personal contact information, work contact information, or no contact information. Upon the caller's instruction, the caller's phone sends an SMS message to the recipient's phone using a predetermined SMS message arrangement. When the recipient's phone receives the SMS message, the recipient's phone recognizes that the SMS message includes contact information by analyzing the arrangement of the SMS message. The recipient's phone automatically prompts the recipient to add the caller's contact information to the recipient's contact information. The recipient's phone also automatically prompts the recipient to provide the recipient's contact information to the caller. The recipient can choose to send all contact information, personal contact information, work contact information, or no contact information. Upon receiving the recipient's contact information, the caller is automatically prompted to add the recipient's contact information to the caller's contact list. Further embodiments of the invention can be used for devices other than communication devices and/or over networks other than mobile networks. Other embodiments are within the scope of the invention.

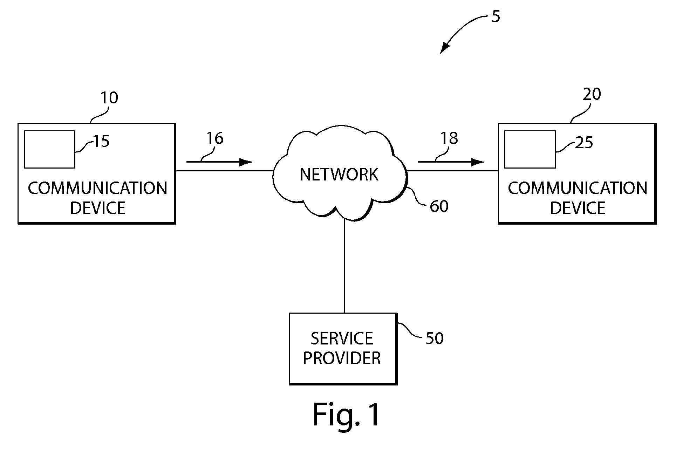

Referring to FIG. 1, a system 5 includes communication devices 10 and 20, CallerXchange application modules 15 and 25, a service provider 50, and a mobile operator network 60. The communication devices 10 and 20 are portable communication devices such as a cell-phone, a Blackberry®, a personal digital assistant (PDA), a personal computer, a cordless land-line based phone, etc., although other communication devices can be used with the system 5 (e.g., the communication device 10 can be a network server configured to send SMS messages to a cell-phone version of the communication device 20). The communication devices 10 and 20 are configured to provide communication services to users of the communication devices 10 and 20 via, for example, a mobile phone service provided by an operator of the network 60. While two of the communication devices 10 and 20 are shown, other quantities of communication devices are possible, although other configurations are possible. The communication devices 10 and 20 are configured to include Universal Subscriber Identity Modules ((U)SIMs) and/or device phonebooks that are configured to receive and store information. The application modules 15 and 25 are included in the (U)SIM of the communication devices 10 and 20, respectively, although other configurations are possible (e.g., the applications 15 and 25 can be located on an operating system of the communication devices 10 and 20 and/or be hosted on a remote server). The application modules 15 and 25 are preferably configured to provide for automatic exchange and/or storage of users' contact information (as described more fully below). The service provider 50 is configured to provide SMS service to the communication devices 10 and 20 (e.g., by providing store-and-forward service). The service provider 50 can be, for example, a mobile operator short message service center (SMSC). The network 60 is configured to provide communication and/or data services to the communication devices 10 and 20. For example, the network 60 is a terrestrial cellular communication network, a satellite-based communication network, a Universal Mobile Telecommunications System (UMTS), a Global System for Mobile Communications (GSM) system, a code division multiple access (CDMA) system, a time division multiple access (TDMA) system, etc.

The communication devices 10 and 20 are configured to prompt the respective users of the communication devices 10 and 20 to provide contact information (e.g., work telephone number(s), home telephone number(s), fax number(s), e-mail addresses(s), etc.) for storage in the communication devices 10 and 20, or elsewhere. While the following discussion focuses on the communication device 10, the operation of the communication device 20 is preferably similar. The communication device 10 is configured to prompt a user to provide contact information during an initial setup phase (e.g., shortly after purchasing the communication device 10), although the user can be prompted to provide information at other times (e.g., at predetermined intervals). The communication device 10 is configured to store the user's contact information, for example, within the (U)SIM of the communication device 10, and/or remotely (e.g., on the communication system and/or within a remote server). The communication device 10 is configured to prompt the user to categorize the contact information provided by the user of the communication device 10. For example, the user can be prompted to categorize individual pieces of contact information as being personal, work, primary, secondary, traveling, etc.

The application modules 15 and 25 are configured to provide for automatic transmission, reception, and/or storage of user information between users of the communication devices 10 and 20. For example, the application module 15 is configured to, at predetermined times (e.g., upon completion of a call between the communication devices 10 and 20), automatically prompt the user of the communication device 10 to provide the user of the communication device 20 with the contact information of the user of the communication device 10. The application module 15 is configured to prompt the user of the communication device 10 to choose some or all of the stored contact information to send to the user of the communication device 20 (e.g., the user of the communication device 10 can choose to provide only "work information" to the user of the communication device 20). The application module 25 is configured to cause the communication devices 20 to automatically receive user's (of the communication device 10) contact information and to automatically prompt the user of the communication device 20 to store the received contact information into the (U)SIM and/or device phonebook of the communication device 20 after a communication event has concluded. The application modules 15 and 25 are configured to provide information to other communication devices using SMS, although other information transfer methods can be used such as TCP/IP.

The application modules 15 and 25 are configured to send SMS messages that each include a user's contact information. The application module 15 is configured to send either an unformatted text SMS message, or a formatted binary SMS message including the communication device 10 user's contact information. The application module 15 is configured to send the SMS message using a packet arrangement that the application module 25 is configured to recognize as including the contact information of the user of the communication device 10. The packet arrangement used to send the SMS message can include an SMS arrangement that includes, for example, space characters and new line characters at predetermined locations. SMS message arrangement can also include predetermined text fields at predetermined locations within the SMS message. While the above discussion has focused on how the application module 15 sends SMS messages, the application module 25 preferably sends SMS messages in a similar manner.

The application module 25 is configured to process an incoming SMS message in accordance with a type of the SMS message. The SMS message can have different arrangements which can preferably be recognized by the application module 25. For example, when the application module 25 receives an SMS message sent by the application module 15, the application module 25 is configured to analyze the arrangement of the SMS message to determine whether the message matches a template corresponding to an SMS message that includes contact information. The application module is configured to, if an SMS message arrangement match is made, process the incoming SMS packet in accordance with instructions associated with the type of SMS packet received. For example, upon receiving an SMS message which is recognized as including contact information, the application module 25 is configured to prompt the user of the communication device 20 to add the contact information included in the SMS message to the address book of the communication device 20 and to prompt the user of the communication device 20 to provide return contact information to the communication device 10. While the above discussion has focused on how the application module 25 processes incoming SMS messages, the operation of the application module 15 is preferably similar.

The exchange of information between the communication devices 10 and 20 is preferably based on the users having the application modules 15 and 25, enabled on the communication devices 10 and 15, respectively (e.g., within a (U)SIM card contained within each of the communication devices 10 and 15), although other configurations are possible. In the event that the communication device 20 does not include the application module 25, the communication device 20 is configured to treat the CallerXchange SMS message as a regular text SMS message (e.g., that includes the communication device 10 user's information) in an inbox of the communication device 20.

The users of the communication devices 10 and 20 preferably enable sharing of contact information by providing contact information for storage in the respective ones of the communication devices 10 and 20. For example, a user can enter contact information into a communication device at the time of purchase using a setup sequence. The contact information (e.g., called MyProfile) is preferably stored in a profile file. Contact information is preferably categorized by the user as Personal and/or Business information, although other categories are possible (e.g., Secondary Personal, Secondary Work). When the user sends or receives the contact information, the user preferably has control of whether and what information to send or store, e.g., Mobile number only, Personal Profile, Business Profile, all three profiles or Do Not Send (e.g., do not send any contact information).

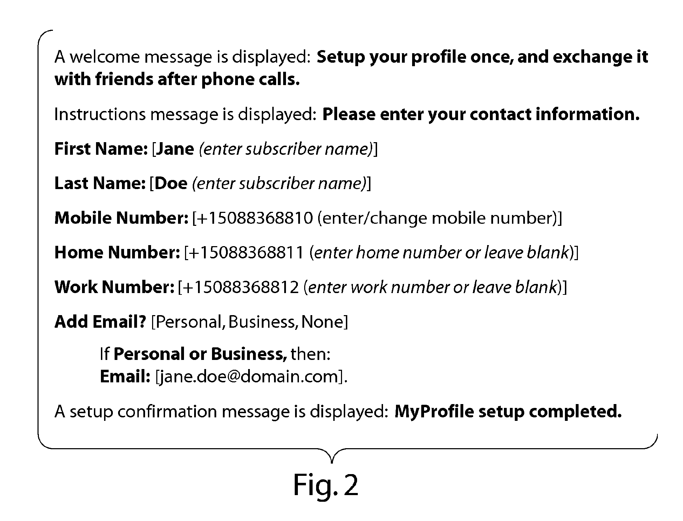

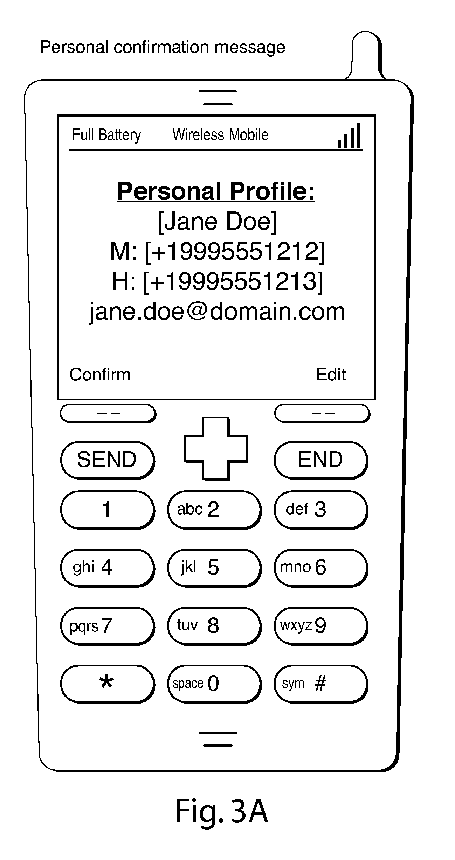

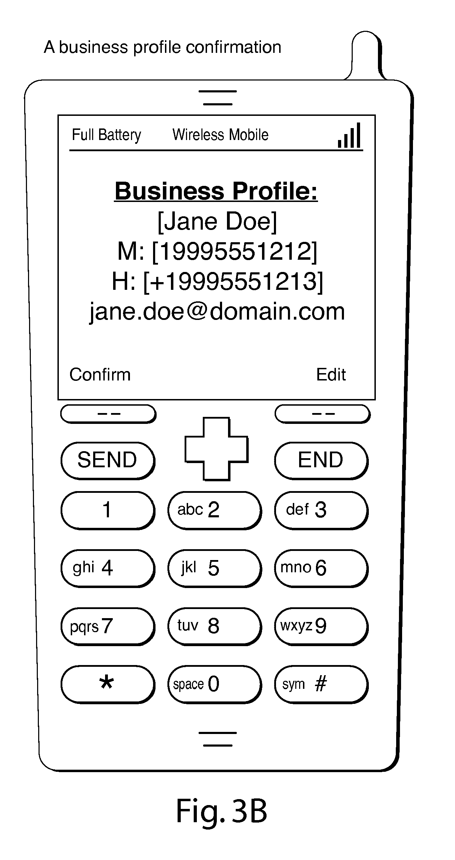

Referring to FIG. 2, a profile initialization sequence is shown. The profile setup process is preferably a linear process, and is preferably invoked after every startup of the device, until the setup process is complete, although the setup process can be invoked at other times. During the setup process, the application module 15 is configured to prompt the user to input the following information: FirstName: [Jane (*enter user name)*]*,* LastName: [Doe *(enter user name)*]*,* MobileNumber: [+19995551212 (enter/change MobileNumber)], HomeNumber: [+19995551213 (*enter HomeNumber or leave blank)*]*,* WorkNumber: [+19995551214 (*enter WorkNumber or leave blank)*] and Email: [jane.doe@domain.com]. The application module 15 can be configured such that some of the fields can be mandatory. The application module 15 can also be configured to prompt the user to provide additional information (e.g., assistant information, spouse information, etc.). While FIG. 2 has been discussed in the context of the application module 15, is operation of the application module 20 is preferably similar. Referring to FIGS. 3a and 3b, once the profile initialization is complete, the information contained therein is preferably displayed for confirmation. For example, the personal profile is preferably displayed as Personal Profile: [Jane Doe], M: [+19995551212], H: [+19995551213] and jane.doe@domain.com, and the business profile as Business Profile: [Jane Doe], M: [+19995551212], W: [+19995551214] and jane.doe@domain.com.

After the initialization process has been completed, the user is preferably not asked again to provide contact information at each device startup, but can be prompted to do so at some time after the first startup, although other configurations are possible. For example, the user can be prompted to update the user's contact information on a monthly basis. The user can also update contact information (or complete the setup process, if not completed at device startup) by manually navigating to a CallerXchange settings menu and entering each data field. The setup process is preferably only completed once each mandatory field, if any, has been entered and accepted.

If mandatory fields are used, the FirstName, LastName, and MobileNumber are preferably mandatory fields. If proper values are not entered into the mandatory fields, the application is configured to ask the user to input the desired information again. If an optional field is left blank, it is preferably not included when a MyProfile SMS message is sent. For example, if the user chooses to leave HomeNumber blank in MyProfile, then HomeNumber is preferably not included in the MyProfile SMS message when the user chooses to send Personal information or Send All information.

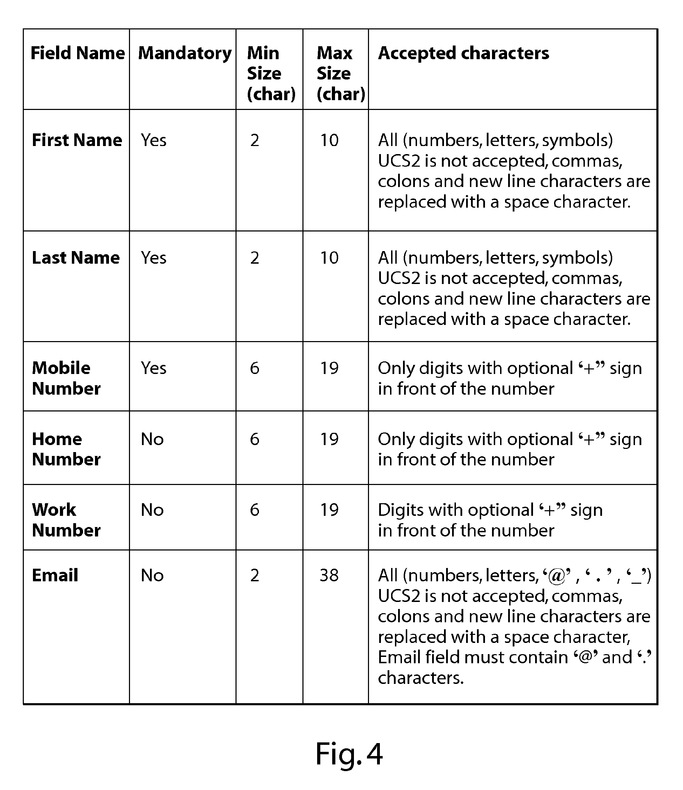

Referring to FIG 4, preferred values for each field in the profile are shown. For example, a summary including the field names, mandatory status, minimum and maximum character sizes, and accepted characters is shown. Aside from a blank field, user inputs are preferably validated against minimum and maximum number of characters and also the set of accepted characters. The FirstName preferably has a minimum of 2 characters and a maximum of 10 characters and all (numbers, letters, symbols) are accepted, while UCS2 is not accepted. Commas, colons, and new line characters are preferably replaced with a space character. The LastName preferably has a minimum of 2 characters and a maximum of 10 characters and all (numbers, letters, symbols) are accepted, while UCS2 is not accepted. Commas, colons, and new line characters are replaced with a space character. The MobileNumber preferably has a minimum of 6 characters, a maximum of 19 characters and only digits, with the optional "+" sign in front of the numbers, are acceptable. The HomeNumber preferably has a minimum of 6 characters, a maximum of 19 characters and only digits, with the optional "+" sign in front of the numbers are acceptable. The WorkNumber preferably has a minimum of 6 characters, a maximum of 19 characters and only digits with the optional "+" sign in front of the number are acceptable. The Email Address field preferably has a minimum of 2 characters, a maximum of 38 characters and all numbers, letters, '@', '.', '_' are accepted, while UCS2 is not accepted. Commas, colons, and new line characters are replaced with a space character. The Email field preferably must contain '@' and '.' characters. The Email field preferably must also contain a '.' after the '@' character. Entering any symbol other than [a-z], [A-Z], [0-9], '@', '.' and '_' preferably invalidates the e-mail. Any or all whitespace (space or new line) comma (',') and colon (':') characters trailing FirstName, LastName and Email fields are cleaned up (e.g. formatted properly) by the application module automatically. The characteristics shown in FIG. 4 are exemplary, and other configurations are possible (e.g., UCS2 can be accepted).

Preferably, the following data are configured by the mobile operator within the application modules 10 and 15 prior to deployment: Default Country Code, IDD Prefix (International Direct Dialing) and NDD Prefix (National Direct Dialing). For example, the values for France would be: Default Country Code: +33, IDD Prefix: 00 and NDD Prefix: 0.

A phone number formatting module is preferably included in each of the application modules 15 and 25 and is configured to standardize the format of numbers stored in the profile so that the phone numbers are consistent with international format. The formatting module preferably includes the automatic pre-population of the Country Code (prefixed with "+") into the profile fields during setup, so users do not have to manually enter this information. After the number is entered, the application module preferably parses the phone number and adjusts the number to international dialing format, if desired. The entire number should be 19 digits or shorter and begin with a country prefix ('+' sign followed by the country code). If the number does not comply with this rule, it is preferably automatically formatted according to the data provided by a mobile operator. Preferred formatting rules for the phone numbers are as follows: If entered, the IDD Prefix is substituted with the universal '+' sign; if entered, the NDD Prefix is removed and the number is prefixed with a '+' sign and the Default Country Code; and if neither the IDD nor the NDD are entered, the number is prefixed with a '+' sign and the Default Country Code.

The "Send" function included in the application modules 10 and 15 is configured to provide the ability for a user to send the user's contact information to the person with whom the user communicated. For example, this function is preferably initiated after the communication event between the communication devices 10 and 20 has terminated by asking a simple question to a first user of the communication device 10 such as "Send MyProfile?" The first user preferably has four options: Do Not Send, Mobile Only, Personal, Business, or Send All. If the first user chooses Do Not Send, the application module preferably returns to an idle state. If the first user chooses Mobile Only, an SMS message is preferably prepared and sent to a second user (i.e., of the communication device 20) which contains FirstName, LastName, and MobileNumber data fields specified in MyProfile. If the user chooses Personal, an SMS message is preferably prepared and sent to the second user which contains FirstName, LastName, MobileNumber, HomeNumber data fields specified in the user's profile. If the e-mail type is Personal, the Email field is included as well. If the user chooses Business, an SMS message is preferably prepared and sent which contains FirstName, LastName, MobileNumber, WorkNumber data fields specified in the user's profile. If the e-mail type is Business, the Email field is preferably included as well. If the user chooses Send All, an SMS message is preferably prepared and sent which contains FirstName, LastName, MobileNumber, HomeNumber, WorkNumber and Email fields specified in the user's profile.

The application modules 10 and 15 can preferably generate and accept at least two different message types including unformatted text SMS messages and formatted binary SMS messages. The type of message format used can be chosen, for example, by an operator of the service. Configurations of the applications modules 10 and 15 accepting only a single message type are possible, including message types other than those listed above.

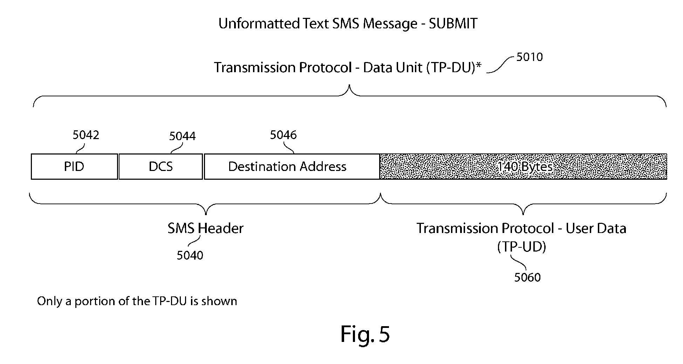

Referring to FIGS. 5-6, and 8-9, SMS information packets are shown. The SMS messages preferably comprise a Transmission Protocol - Data Unit (TP-DU) that contains an SMS Header and a Transmission Protocol - User Data (TP-UD). For example, to send an SMS message from the first user application 15 to the second user application 20, the first user application 15 is configured to create and send an SMS Submit 16 message to the SMSC 50. The SMSC 50 is configured to receive the SMS Submit 16 message and to convert it into a SMS Deliver 18 message. Preferably, at least a portion of the SMS headers of the SMS Submit 16 message and the SMS Deliver 18 message are different, although other configurations are possible.

Referring to FIG. 5, a TP-DU 5010 includes, *inter alia,* an SMS Submit header 5040, and a TP-UD 5060. The SMS Submit header 5040 is configured to include a Protocol Identifier (PID) value 5042, a Data Coding Scheme (DCS value) value 5044, and a destination address 5046. The TP-UD 5060 is configured to store the content of the SMS message. For example, the TP-UD 5060 is configured to contain up to 140 bytes. The PID value 5042 preferably serves as an indicator of the type of message being sent. Preferably, 0x00, serves as the default value for the text SMS messages. For example, if the sending device sets the PID value to 0x00, the receiving device can be configured to detect that this is a text SMS message. The DCS value 5044 preferably indicates the designation of the SMS message. For example, setting the DCS value 5044 to 0x12 (7-bit SMS alphabet (U)SIM-specific message) indicates that the SMS message's designation is the (U)SIM. If the DCS value is not equal to 0x12, then the receiving communication device stores the text SMS message (e.g., in an EFSMS elementary file). The application module 15 is configured to assemble/format the TP-UD 5060.

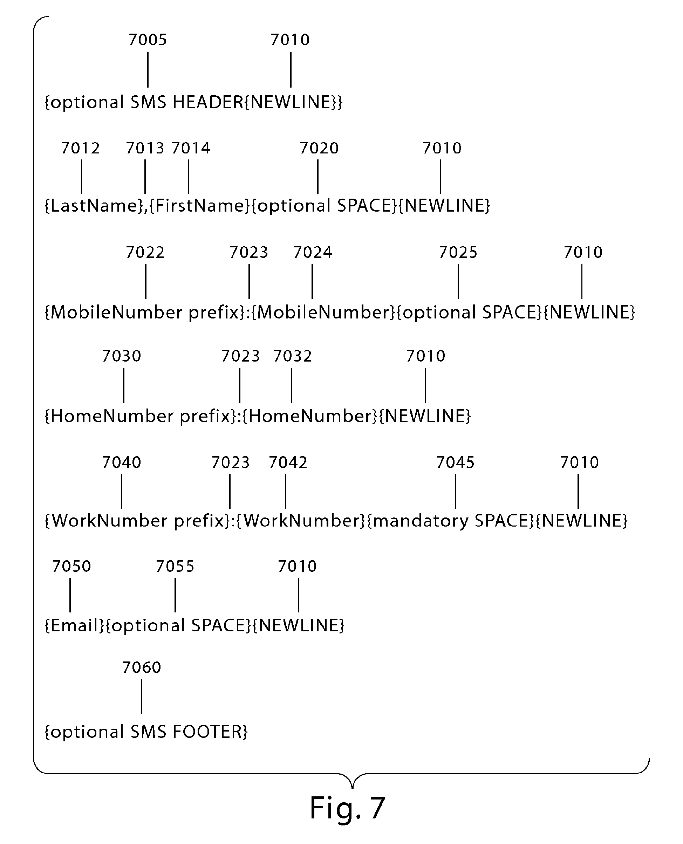

Referring also to FIG. 7, a preferred example of how the application module 15 formats the TP-UD is shown. The application module 15 is configured to format the TP-UD 5060 by generating lines of information as described below. While the TP-UD 5060 is described below, other configurations are possible. For example, more or fewer fields can be used, other characters can be used, the fields can appear in different orders, the formatting scheme can be expanded as the device phonebook fields, SIM phonebook, GSM, and/or CDMA standards are expanded in the future, etc.

A first line of information in the TP-UP 5060 begins with an optional SMS HEADER field 7005 followed by a NEWLINE character " 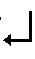 " 7010, (e.g., in ASCII code 0Ah). Inclusion of the SMS HEADER field 7005 in the message is optional, e.g., based on the mobile operator's requirements. If the SMS HEADER field 7005 is not included in the message, then the NEWLINE character 7010 after the SMS HEADER field 7005 is preferably excluded. The SMS HEADER field 7005 is preferably a text string, for example "Contact Information" and is customizable (e.g., by a mobile operator).

A second line of information in the TP-UP 5060 begins with a LastName field 7012, followed by a "," (COMMA) 7013, followed by a FirstName field 7014, followed by an optional SPACE character 7020, followed by the NEWLINE character " 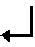 " 7010. The presence or absence of the optional SPACE 7020 can indicate the message type. Additional SPACE characters 7020 can indicate different meaning such as a that a message includes forwarded contact information. For example, if the SPACE 7020 is omitted, the message is an original message (e.g., a message from the first user 10, prior to prompting the second user 20 to provide contact information). Likewise, if a SPACE 7020 is present, the message is a reply message (e.g., a message from the second user 20 in response to a message from the first user 10).

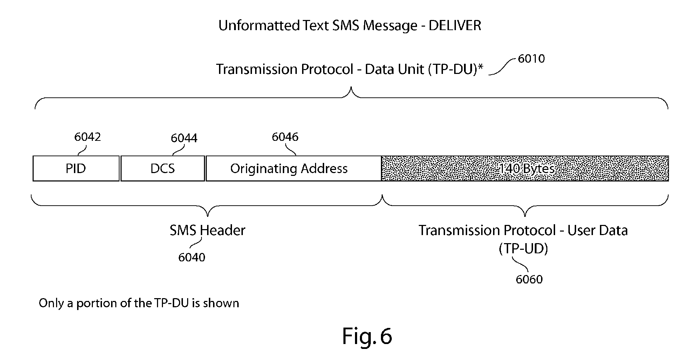

A third line of information in the TP-UP 5060 starts with a MobileNumber prefix field 7022, followed by a ":" (COLON) 7023, followed by a MobileNumber field 7024, followed by an optional SPACE character 7025, followed by the NEWLINE character " 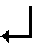 " 7010. The optional SPACE 7025 in the third line can indicate whether the Originating Address 6046 within the SMS header 6040 (e.g., as shown in FIG. 6) should be used as the MobileNumber 7024. For example, if a SPACE 7025 is present, the Originating Address 6046 field can be disregarded in the SMS header 6040 and the MobileNumber 7024 in the TP-UD 6060 is preferably used (e.g., to prevent the sender from sending a deceptive telephone number). Likewise, if the SPACE 7025 is omitted, the Originating Address 6046 from the SMS header 6040 is preferably used as the default value for the MobileNumber 7024.

A fourth line of information in the TP-UP 5060 starts with the HomeNumber prefix field 7030, followed by a ":" (COLON) 7023, followed by a HomeNumber field 7032, followed by the NEWLINE character " 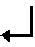 " 7010.

A fifth line of information in the TP-UP 5060 starts with a WorkNumber prefix field 7040, followed by a ":" (COLON) 7023, followed by a WorkNumber field 7042, followed by a SPACE 7045, followed by the NEWLINE character " 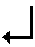 " 7010. The SPACE 7045 indicates the WorkNumber 7042.

A sixth line of information in the TP-UP 5060 starts with an Email field 7050, followed by an optional SPACE 7055, followed by the NEWLINE character " 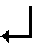 " 7010. The optional SPACE 7055 can indicate the type of e-mail address. For example, if the SPACE 7055 is present, the e-mail type is BusinessEmail. Likewise, if the SPACE 7055 is omitted, the e-mail type is PersonalEmail.

A seventh line of information in the TP-UP 5060 is an optional SMS FOOTER field 7060. Other configurations of the TP-UD 5060 are possible. The SMS FOOTER field 7060 can be based on the mobile operator's requirements. The SMS FOOTER field 7060 is preferably a text string, for example "Brought to you by ABC Operator" and the SMS FOOTER field 5060 can be customizable.

Referring to FIG. 6, the TP-DU 6010 includes, *inter alia,* an SMS Deliver header 6040, and a TP-UD 6060. The SMS Deliver header 6040 is configured to include a PID value 6042, a DCS value 6044, and an originating address 6046. The PID value 6042 and the DCS value 6044 are preferably similar to the PID value 5042 and the DCS value 5044. The service provider 50 is configured to transfer the SMS submit TP-UD 5060 preferably with the same content to the SMS deliver TP-UD 6060. For example, the service provider 50 is configured to convert the SMS submit TP-UD 5060 as is (e.g., the information contained in the TP-UD 5060 is substantively unchanged by the service provider 50) to the SMS deliver TP-UD 6060. The service provider 50, however, is configured to substitute the originating address 6046 for the destination address 5046.

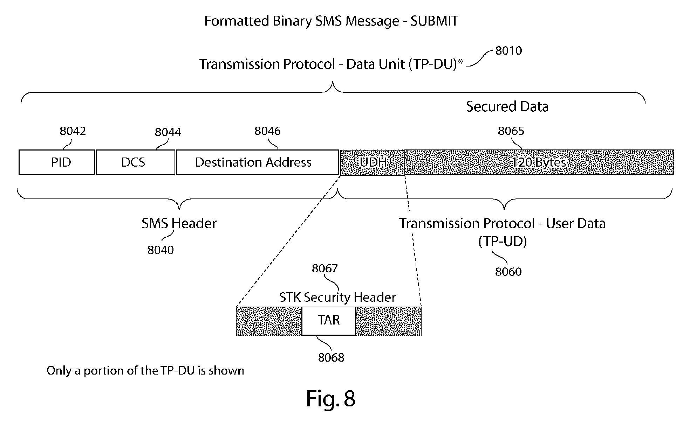

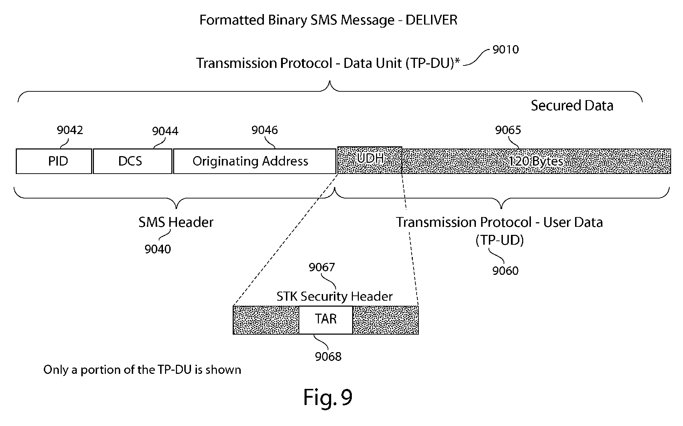

Depending on the mobile operator's choice of deployment, the application modules 15 and 25 can send formatted binary SMS messages. The following description references the 3GPP 03.48 Secure Messaging Specification, although other specifications can be used. The following section describes how the formatting can be formulated for the formatted binary SMS messages. A complete transmitted formatted binary SMS message preferably has two components: Submit and Deliver. Referring to FIGS. 8 and 9, components of formatted binary SMS message-Deliver and message-Submit are shown.

Referring to FIG. 8, a formatted binary SMS message TP-DU 8010 includes, *inter alia,* an SMS header 8040, and a TP-UD 8060. The SMS header 8040 includes a PID value 8042, a DCS value 8044, and a destination address 8046. The TP-UD 8060 includes a SIM Tool Kit (STK) Security Header 8067 and a secured data field 8065. The STK Security Header 8067 is configured to contain a Toolkit Application Reference (TAR) value 8068. Preferably, the (U)SIM application modules are loaded on the (U)SIM of the communication devices 10 and 20, respectively, with a TAR value 8068 that is associated with the application modules 15 and 20. The application module 15 is configured to dynamically assign different TAR values 8068 depending on the message type. The application modules 10 and 20 are configured to include a TAR value 8068 in each outgoing binary SMS message, although other configurations are possible. These different TAR values can be used by the application modules 15 and 20 to communicate with a remote server component which can provide additional intelligence and processing ability. In the case where the remote server component is used, the application module 15 is configured to submit a communication to a network component prior to delivery of an SMS message to application module 25.

Referring to FIG. 9, a formatted binary SMS message TP-DU 9010 includes, *inter alia,* an SMS header 9040, and a TP-UD 9060. The SMS header 9040 includes a PID value 9042, a DCS value 9044, and an originating address 9046. The TP-UD 9060 includes an STK Security Header 9067 and a secured data 9065. The STK Security Header 9067 is configured to contain a Toolkit Application Reference (TAR) value 9068. Preferably, the (U)SIM application modules are loaded on the (U)SIM of the communication devices 10 and 20, respectively with a TAR value 9068 that is associated with the application modules. The application module 15 is configured to dynamically assign different TAR values 9068 depending on the message type. Preferably, there is only one TAR value 9068 for each type of incoming binary SMS message. For example, the communication device can recognize that an incoming message is a CallerXchange message by the TAR value included in the message.

The originating address 9046 of the formatted binary SMS message - Deliver is preferably the only component within the SMS Header 9040 that differs from the formatted binary SMS message-Submit SMS Header 8040, which contains Destination Address 8046 instead. The service provider 50 is configured to transfer the SMS submit TP-DU 8060 preferably with the same content to the SMS deliver TP-UD 9060. For example, the service provider 50 is configured to convert the SMS submit TP-UD 8060 as is (e.g., the information contained in the TP-UD 8060 is substantially unchanged by the service provider 50) to the SMS deliver TP-UD 9060. The service provider 50, however, is configured to substitute the destination address 8046 for the originating address 8046.

Portions of the TP-DU 8010 and 9010 can be configured with predetermined values that can be used by the communication devices 10 and 20 to identify characteristics of the TP-DU 8010 and 9010. The PID values 8042 and 9042 can be used to indicate a type of the SMS message. For example, the application modules 15 and 20 can be configured such that if the PID value 9042 is set to 0x7F the application modules 15 and 20 can recognize the incoming SMS message as a binary SMS message. The DCS values 8044 and 9044 can be used to indicate a designation (e.g., destination within the communication device) of an incoming SMS message. For example, the application modules 15 and 20 can be configured such that if the DCS value 9044 is 0x16 or 0xF6 (e.g., 8-bit encoding - (U)SIM-specific message), the application modules 15 and 20 recognize that the designation of the SMS message is the (U)SIM. Likewise, if the DCS value 9044 is not equal to 0x16 or OxF6, the application modules 15 and 20 can be configured to store the binary SMS message elsewhere (e.g., an EFSMS elementary file).

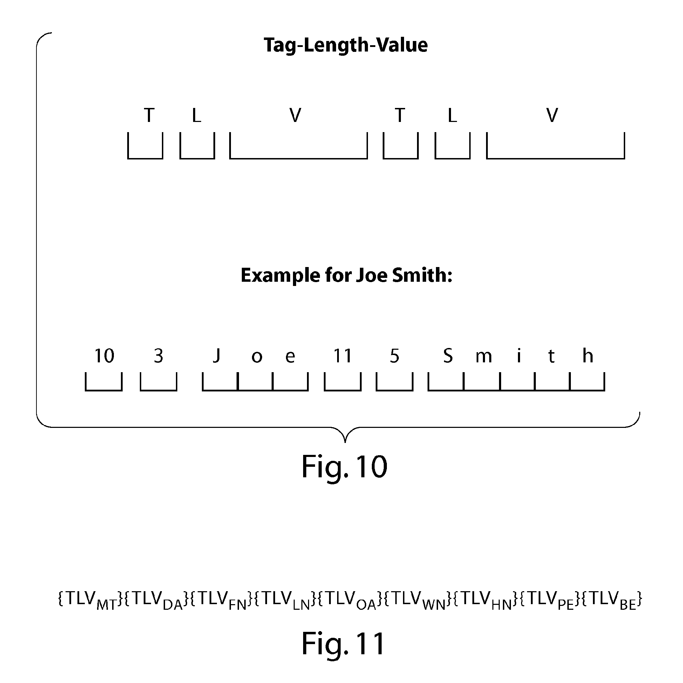

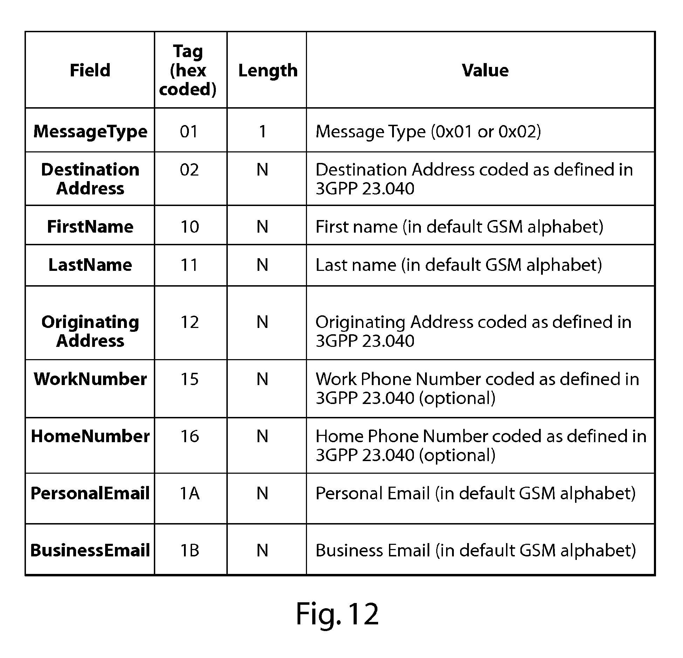

Referring also to FIG. 10, a formatted binary SMS message uses Tag-Length-Value (TLV) strings to transfer information. The Tag portion of the TLV string is a single-octet identifier which can uniquely define a parameter (e.g., as shown in FIG. 12). For example, each field within the binary SMS message preferably contains a corresponding Tag (e.g., "10" indicates that a first name is included). The Length portion of the TLV string is preferably a single-octet indicating the length of the corresponding value portion of the TLV string in octets, preferably not including the type and length fields. The Value portion of the TLV string is preferably from 1 to 32 octets in length and contains the value for the parameter. The parameters preferably directly follow each other in the body, which is, e.g., a stream of octets. For example, FIG. 10 describes how a TLV string is formatted and decoded. Joe Smith can be formatted in a data string as {TLV_{FN}} {TLV_{LN}}, wherein TLV_{FN} = [10] [3] [FirstName] and TLV_{LN} = [11] [5] [LastName]. The FirstName Tag is represented by the number 10 and the LastName Tag is represented by the number 11. FirstName and LastName are the ASCII representations of "Joe" and "Smith," respectively. Other configurations of the TLV strings are possible.

Referring to FIG. 11, an exemplary TP-UP 9065 is shown, including a formatted binary SMS message. The TP-UD 9060 within a formatted binary SMS message-Deliver preferably contains this data string:
{TLV_{MT}} {TLV_{DA}} {TLV_{FN}} {LV_{LN}}{TLV_{OA}} {TLV_{WN}} {TLV_{HN}} {TLV_{PE}} {TLV_{BE}}
wherein TLV_{MT} is the data representation for MessageType, TLV_{DA} is the data representation for Destination Address, TLV_{EN} is the data representation for FirstName, TLV_{LN} is the data representation for LastName, TLV_{OA} is the data representation for Originating Address, TLV_{WN} is the data representation for WorkNumber, TLV_{HN} is the data representation for HomeNumber, TLV_{PE} is the data representation for PersonalEmail and TLV_{BE} is the data representation for BusinessEmail.

Referring to FIG. 12, exemplary Tag values for fields included within the TLV format described above are shown. The {TLV_{MT}}{TLV_{FN}}{TLV_{LN}} can be mandatory data strings. The remaining data strings are preferably optional. The sequence of TLV strings can be configured and decoded in any order. If the TLV_{OA} is included, then the Originating Address within the SMS Header can be disregarded. If, TLV_{OA} is not included, then the Originating Address (e.g., mobile number of the sender) is preferably collected from the SMS Header. The Tag value for MessageType is 01. The Tag value for Destination Address is 02. The Tag value for FirstName is 10. The Tag value for the LastName is 11. The Tag value for the Originating Address is 12. The Tag value for MobileNumber is 14. The Tag value for WorkNumber is 15. The Tag value for HomeNumber is 16. The Tag value for PersonalEmail is 1A. The Tag value for BusinessEmail is 1B.

The communication device 20 is configured to receive and process SMS messages from the communication device 10. The operating system of the communication device 20 is configured to perform a preliminary check on an incoming SMS message to determine the type of the SMS message. For example, the operating system of the communication device 20 is configured to examine the PID value (e.g., the PID value 6042 or 8042) and/or the DCS value (e.g., DCS value 6044 or 8044) to determine if the respective values match those of an unformatted text SMS message (e.g., the TP-DU 6010) or a formatted text SMS message (e.g., the TP-DU 8010).

If the incoming SMS message is an unformatted SMS message, the application module 25 is preferably configured to automatically trigger. The application module 25 is configured to update the EFSMS elementary file on the (U)SIM by overwriting the first record within the (U)SIM and to notifying the STK Framework. The (U)SIM is configured to notify applets registered with the STK framework of one of the following events in accordance with the 3GPP Technical Specifications 03.48:
EVENT_UNFORMATTED_SMS_PP and/or EVENT_UNFORMATTED_SMS_PP_UPD.
The application module 25 is configured to check the DCS value (e.g., the DCS value 6044 or 8044) in the incoming SMS message to determine if the incoming SMS message is a formatted binary SMS or an unformatted text SMS message. If the incoming SMS message is an unformatted text SMS message, the application module 25 is configured to determine if the formatting of the SMS message matches the desired formatting. If the formatting is verified, the application module 25 is configured to cause the communication device to prompt the second user to add the first user's contact information (as described more fully below).

The communication device 20 is also configured to process incoming formatted binary SMS messages. When a binary SMS message with the format described above reaches the communication device 20, preferably the STK Security Header 9067 has been defined. If the incoming SMS message is a formatted binary SMS message, the communication device 20 is configured to send an EVENT_FORMATTED_SMS_PP_ENV message and/or an EVENT_FORMATTED_SMS_PP_CB message to the STK Framework (of the communication device 20) in accordance with the 3GPP technical specification. The STK Framework is configured to check the PID value 9042, the DCS value 9044, and the TAR value 9068 (e.g., according to the 3GPP 03.48 Secure Messaging Specification). If the TAR value 9068 in the STK Security Header 9067 matches the TAR value corresponding to the application module 25, then the application module 25 can be triggered (e.g., to further process the incoming SMS message). The application module 25 is configured to be triggered by the EVENT_FORMATTED_SMS_PP _ENV and/or the EVENT_FORMATTED_SMS_PP_CB messages to validate and/or decode the TLV values included within the secured data 9065 of the incoming SMS message. If the TLV values are validated, the application module 25 is configured to cause the communication module 20 to prompt the second user to add the first user's contact information (as described more fully herein). The application module 25 is configured to stop processing the binary SMS message if one or more of the mandatory data strings are invalid.

As described above the application module 25 is configured to process the incoming text SMS message and to stop processing of the SMS message if at least a portion of the formatting is invalid. The application module 25 is configured such that if all of the predetermined information is formatted correctly (e.g., as described above), the application module 25 triggers the "Add?" prompt to the second user (e.g., by providing a visual display on the communication device 20). The application module 25 is configured such that if the second user selects "Add" then the information is stored in the phonebook of communication device 20. The application module 25 is configured to prompt the second user (e.g., by providing a visual display on the communication device 20) to "Send MyProfile?", e.g., in response to the user accepting the user's information. If the second user sends the second user's profile to the first user, then the application module 25 is configured to prepare an SMS message with, for example, the above formatting rules to be sent to the application module 15.

An alert function of the application modules 15 and 20 can be configured to be automatically triggered by an incoming text SMS message and to alert the user to the incoming SMS message using, e.g., depending on the configuration of the communication devices 10 and 20, respectively. The communication device 20 can be configured to immediately display the CallerXchange application module 25 menu. For example, the communication devices 10 and 20 can be configured to visually indicate that a new text SMS message has been received and prompt the user to view the SMS message in the Inbox or cancel. The communication devices 10 and 20 can be configured to indicate that a new SMS message has been received and immediately display an appropriate menu (e.g., a CallerXchange menu). Other configurations are possible.

The application module 25 is further configured to receive concatenated SMS messages send by users who, for example, send extended profile information (e.g., in accordance with TS 23.040 [3rd Generation Partnership Project; Technical realization of Short Message Service (SMS)]). For example, the STK Framework is configured to link single SMS messages together to re-assemble the original SMS message prior to processing.

While the above discussion has focused on how the communication device 20 processes an incoming SMS message, the communication device 10 preferably processes the incoming SMS messages using a similar process.

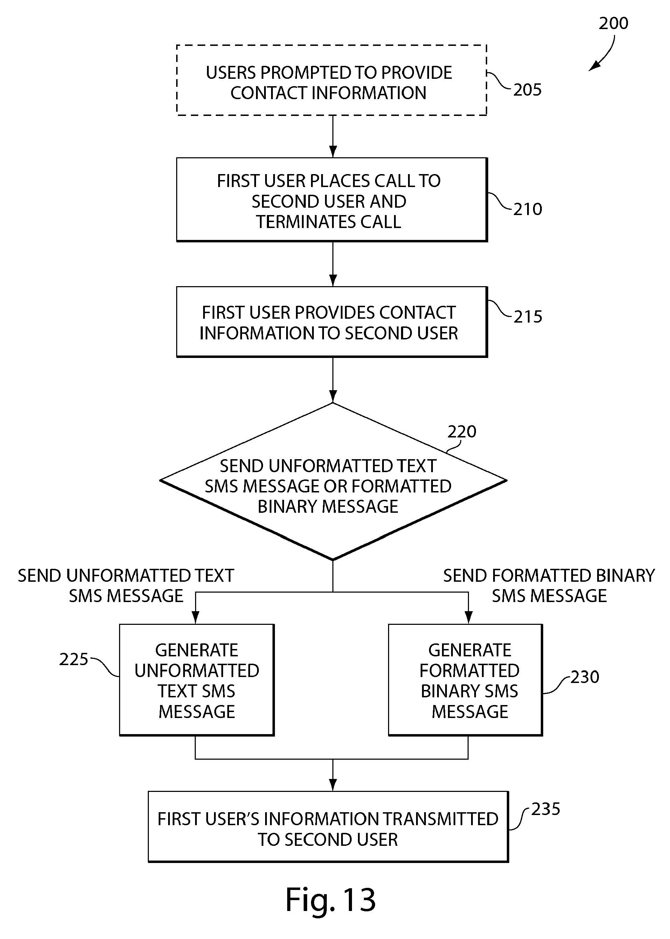

In operation, with reference to FIG. 13, and further reference to FIGS. 1-12, a process 200 for sharing information between users of a mobile communication system, using the system 5 includes the stages shown. The process 200, however, is exemplary only and not limiting. The process 200 may be altered, e.g., by having stages added, removed, altered, and/or rearranged.

At stage 205 the first user is prompted to provide contact information to the communication device 10. Stage 205 occurs during an initialization phase (e.g., when the first user purchases the phone or the (U)SIM card), although stage 205 can occur at other times. If the first user does not enter the contact information in response to the initial prompting, then the first user is preferably repeatedly prompted (e.g., each time the communication device 10 is turned on) to provide contact information until, for example, the user provides the requested contact information, although other configurations are possible. The first user inputs contact information such as work telephone number(s), home telephone number(s), fax number(s), e-mail address(es), mailing address(es), assistant information, etc. The communication device 10 verifies each of the inputs received by the user to determine if the information is in the proper form (e.g., according to the guidelines shown in FIG. 4). The communication device 10 also standardizes the received inputs (e.g., by adding the IDD prefix). The communication device 10 stores the first user's contact information in a memory contained within the communication device 10, e.g., a SIM.

At stage 210, a call and/or other form of communication (e.g., an SMS message) between the first user and the second user is placed, and is terminated (e.g., using the communication devices 10 and 20). After terminating the communication, at least one of the users is automatically prompted to provide contact information to the other user. For example, after termination of the call, the first user is automatically prompted to provide the first user's contact information to the second user. One or both parties to the call can be automatically prompted to provide contact information to the other caller. For example, only the caller can be prompted, only the recipient can be prompted, both parties can be prompted. The below discussion assumes that the first user is the user that is prompted after termination of the communication. The first user is prompted to choose whether or not to provide contact information to the second user. The first user is also prompted to choose a specific set of contact information to provide to the second user (e.g., work only, home only, assistant only, work and home, etc.). If the first user chooses to provide contact information, the process 200 continues to stage 215, otherwise the process 200 terminates.

At stage 215, the communication device 10 sends the first user's selected contact information to the communication device 20. The application module 15 retrieves the first user's selected contact information from storage (e.g., from the SIM in the communication device 10). The application module 15 retrieves only the desired information, e.g., only "work" information.

At stage 220, the communication device 10 determines how to communicate with the communication device 20. The communication device 10 sends either an unformatted text SMS message or a formatted binary message. The type of message send can be set during initial configuration of the application modules 15 and 25, or at other times. The type of message sent by the communication device can be set by the manufacturer of the communication device 10, the service provider 50, the operator of the network 60, the user of the communication device 10, etc. If the communication device 10 is configured to use an unformatted text SMS message, the process 200 continues to stage 225, if the communication device 10 is configured to use a formatted binary SMS message, the process 200 continues to stage 230.

In stage 225, the application module 15 generates the TP-DU 5010. The application module 15 provides a value in the PID value 5042 that is indicative of the protocol being used by the TP-DU 5010. The application module 15 sets the PID value 5042 to 0x00 to indicate that the message is a text SMS message. The application module 15 provides a value in the DCS value 5044 that is indicative of how the communication device 20 should handle the message. The application module 15 can set the DCS value 5044 to a value of 0x12 to indicate that the message is SIM specific (e.g., using the GSM 03.40 standard). The PID value 5042 and the DCS value 5044 values are entered during the initial configuration of the application modules 15 and 25, for example, by service provider 50. The communication device 20 stores the information according to the DCS value 5044 value, or can choose another location to store the information (e.g., the EFSMS elementary file). The application module 15 is configured to provide an address value to the destination address 5046 (e.g., an address assigned to the communication device 20).

The application module 15 generates the TP-UD 5060 of the TP-DU 5010 by assembling one or more lines of text. The application module generates a first line of text that includes an optional SMS header field (e.g., a predetermined text string including "Contact Information") and the new line character (e.g., " 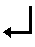 "). The application module 15 generates a second line of text that includes a LastName field, a ",", a FirstName field, an optional space, and the new line character. The application module 15 omits the optional space if the TP-UD 5060 is an original message (e.g., not in response to a message sent by another user), otherwise the optional space is included. The application module 15 generates a third line of text that includes a MobileNumber prefix field, a ":", a MobileNumber, an optional space, and the new line character. The application module 15 includes the optional space in the third line if the communication device 20 should store (as the first user's telephone number) the value included in the MobileNumber field, and omits the optional space in the third line if the communication device 20 should store (as the first user's telephone number) the value included in the Originating Address 6046 (e.g., the optional space in the third line indicates where the communication device 20 should look for the first user's mobile telephone number). Alternatively, the optional space in the third line can be omitted or included by the service provider 50. The application module 15 generates a fourth line of text that includes a HomeNumber prefix field, a ":", a HomeNumber field, and the new line character. The application module 15 generates a fifth line of text that includes a WorkNumber prefix field, a ":", a WorkNumber field, a space, and the new line character. The application module 15 generates a sixth line of text that includes an Email field, an optional space, and the new line character. The application module 15 includes the optional space in the sixth line if the e-mail address in the Email field is a work e-mail address, and omits the optional space in the sixth line if the e-mail address in the Email field is a personal e-mail address. The application module 15 generates a seventh line of text that includes an optional SMS footer field (e.g., a predetermined text string including "ABC Mobile").

At stage 230, the application module 15 generates the TP-DU 8010. The application module 15 provides a value in the PID value 8042 that is indicative of the protocol being used by the TP-DU 8010. The application module 15 sets the PID value 8042 to 0x7F to indicate that the message is a binary SMS message. The application module 15 provides a value in the DCS value 8044 that is indicative of how the communication device 20 should handle the message. The application module 15 can set the DCS value 8044 to a value of 0x16 or 0xF6 to indicate that the message is SIM specific (e.g., using the GSM 03.40 standard). The application module 15 provides an address value to the destination address 8046 (e.g., an address assigned to the communication device 20). The application module 15 generates the TP-UD 8060 of the TP-DU 8010, including the STK security header 8067 and the secured data 8065. The application module 15 includes a TAR value 8068 in the STK security header 8067.

The application module 15 generates the TP-UD 8060 of the TP-DU 8010. The application module generates a data string using contact information and preset TLV values stored in the communication device 10. The data string looks like the following:
{TLVMT} {TLVDA} {TLVFN} {TLVLN} {TLVOA} {TLVWN} {TLVHN} {TLVPE} {TLVBE}.
The application module 15 sets the Tag values for each field as follows: The Tag value for MessageType is 01, the Tag value for Destination Address is 02, the Tag value for FirstName is 10 the Tag value for the LastName is 11 the Tag value for the Originating Address is 12, the Tag value for MobileNumber is 14, the Tag value for WorkNumber is 15, the Tag value for HomeNumber is 16, the Tag value for PersonalEmail is 1A, and the Tag value for BusinessEmail is 1B. The appropriate TLV values for each field are coded (e.g., as shown in FIG. 10). For example, the {TLVFN} portion of the string is coded as follows: The application module 15 looks at the Tag value of the FirstName which is equal to 10. The application module 15 reads the FirstName field to determine the Length of the value. The application module 15 codes the Value of the FirstName field. The application module 15 prepares the remainder of the string as in the FirstName example. In each case, the application module 15 codes the value included in the FirstName, LastName, MobileNumber, WorkNumber, HomeNumber, PersonalEmail, and BusinessEmail and inserts the corresponding values into the string next to the Tag and Length codes.

At stage 235, the first user's contact information is transmitted to the second user. The application module 15 causes the first user's information to be transmitted to the service provider 50 (e.g., an SMSC) via the network 60. The service provider 50 converts the received message (i.e., an SMS submit message) into an SMS deliver message for delivery to the second user. For example, the SMSC converts the destination address 5046 into the originating address 6046 (and/or likewise converts the destination address 8046 into the originating address 9046).

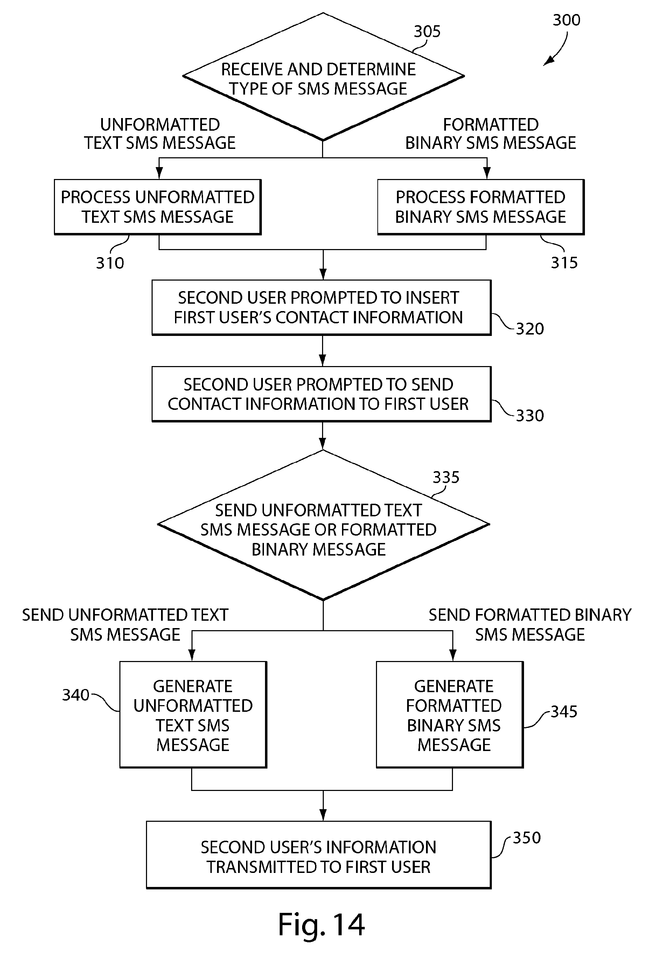

In operation, with reference to FIG. 14, and further reference to FIGS. 1-12, a process 300 for receiving information from users of a mobile communication system, using the system 5 includes the stages shown. The process 300, however, is exemplary only and not limiting. The process 300 may be altered, e.g., by having stages added, removed, altered, and/or rearranged.

At stage 305, the second user (e.g., using the communication device 20) receives the first user's information (e.g., from the communication device 10). The communication device 20 is configured to receive unformatted text SMS messages and formatted binary SMS messages from the first user. The arrival of an incoming SMS message (e.g., unformatted or formatted) automatically triggers the communication device 20 to process the incoming SMS message. The communication device 20 (e.g., the operating system of the communication device 20) is configured to determine if the incoming SMS message is an unformatted text SMS message or a formatted binary SMS message by examining the PID and the DCS values. If the incoming SMS message is an unformatted text SMS message, the process 300 continues to stage 310. If the incoming SMS message is a formatted binary SMS message, the process 300 continues to stage 315.

At stage 310, the application module 25 processes the incoming unformatted text SMS message. The communication device 20 stores the received SMS message in the (U)SIM contained within the communication device 20. The communication device 20 updates the EFSMS elementary file on the (U)SIM by overwriting the first record within the EFSMS file, and automatically notifies the STK Framework of the change. The (U)SIM notifies registered applets (e.g., registered with the STK framework) of the following events: EVENT_UNFORMATTED_SMS_PP_ENV and/or the EVENT_UNFORMATTED_SMS_PP_UPD, according to the 3GPP Technical Specifications 03.48. The notified applets are triggered in a predetermined sequence. The application module 25 is notified and checks the DCS value to determine if the incoming SMS message is a formatted binary SMS message or an unformatted text SMS message (e.g., independent from the check performed by the operating system of the communication device 20). If the incoming SMS message is a formatted binary SMS message, it is ignored. If the incoming SMS message is an unformatted text SMS message, the application module 25 checks the formatting of the SMS message. If the mandatory fields are formatted correctly (e.g., the SMS message is verified), the application module 25 is further triggered and the process 300 continues to stage 320, otherwise the process 300 ends. Furthermore, the communication device 20 can receive the incoming SMS message as Concatenated SMS messages as defined in TS 23.040[11]. For example, the STK Framework links individual SMS messages together to re-assemble the original SMS message.

At stage 315, the application module 25 processes the incoming formatted binary SMS message. The communication device 20 provides an EVENT_FORMATTED_SMS-PP-ENV message and/or an EVENT_FORMATTED_SMS-PP-CB message to the STK Framework in accordance with the 3GPP Technical Specifications 03.48. The STK Framework examines a list of applet TAR values to locate the corresponding TAR value of the application module 25. The STK Framework determines a message type of the incoming formatted binary SMS message by analyzing the TAR value. The application module 25 is triggered by the EVENT_FORMATTED_SMS_PP_ENV message and/or the EVENT_FORMATTED_SMS_PP_CB to examine the TLV values within the Secured Data 9065 of the TP-UD 9060. If the mandatory TLV values are correct, the application module 25 is further triggered and the process 300 continues to stage 320.

At stage 320, the application module 25 is configured such that if all of the desired information is formatted correctly, the application module 25 triggers the "Add?" prompt on the communication device 20. The application module 25 is configured such that if the second user chooses to insert/store the first user's profile in the second user's phonebook, the information included in the SMS message is parsed and stored in the phonebook of the communication device 20 at stage 320 as a new contact.

At stage 330, the application module 25 is configured to prompt the second user to provider the second user's contact information to the first user (e.g., by prompting the second user with "Send MyProfile?" on a display of the communication device 25). If the user responds affirmatively, the process proceeds to stage 335, otherwise, the process 300 ends.

At stage 335, the communication device 10 determines how to communicate with the communication device 20. The communication device 10 sends either an unformatted text SMS message or a formatted binary message. The type of message send can be set during initial configuration of the application modules 15 and 25, or at other times. The type of message sent by the communication device can be set by the manufacturer of the communication device 10, the service provider 50, the operator of the network 60, the user of the communication device 10, etc. If the communication device 10 is configured to use an unformatted text SMS message, the process 300 continues to stage 340, if the communication device 10 is configured to use a formatted binary SMS message, the process 300 continues to stage 345.

In stage 340, the application module 15 generates the TP-DU 5010. The application module 15 provides a value in the PID value 5042 that is indicative of the protocol being used by the TP-DU 5010. The application module 15 sets the PID value 5042 to 0x00 to indicate that the message is a text SMS message. The application module 15 provides a value in the DCS value 5044 that is indicative of how the communication device 20 should handle the message. The application module 15 can set the DCS value 5044 to a value of 0x12 to indicate that the message is SIM specific (e.g., using the GSM 03.40 standard). The PID value 5042 and the DCS value 5044 values are entered during the initial configuration of the application modules 15 and 25, for example, by service provider 50. The communication device 20 stores the information according to the DCS value 5044 value, or can choose another location to store the information (e.g., the EFSMS elementary file). The application module 15 is configured to provide an address value to the destination address 5046 (e.g., an address assigned to the communication device 20).

The application module 15 generates the TP-UD 5060 of the TP-DU 5010 by assembling one or more lines of text. The application module generates a first line of text that includes an optional SMS header field (e.g., a predetermined text string including "Contact Information") and the new line character (e.g., " 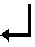 "). The application module 15 generates a second line of text that includes a LastName field, a ",", a FirstName field, an optional space, and the new line character. The application module 15 omits the optional space if the TP-UD 5060 is an original message (e.g., not in response to a message sent by another user), otherwise the optional space is included. The application module 15 generates a third line of text that includes a MobileNumber prefix field, a ":", a MobileNumber, an optional space, and the new line character. The application module 15 includes the optional space in the third line if the communication device 20 should store (as the first user's telephone number) the value included in the MobileNumber field, and omits the optional space in the third line if the communication device 20 should store (as the first user's telephone number) the value included in the Originating Address 6046 (e.g., the optional space in the third line indicates where the communication device 20 should look for the first user's mobile telephone number). Alternatively, the optional space in the third line can be omitted or included by the service provider 50. The application module 15 generates a fourth line of text that includes a HomeNumber prefix field, a ":", a HomeNumber field, and the new line character. The application module 15 generates a fifth line of text that includes a WorkNumber prefix field, a ":", a WorkNumber field, a space, and the new line character. The application module 15 generates a sixth line of text that includes an Email field, an optional space, and the new line character. The application module 15 includes the optional space in the sixth line if the e-mail address in the Email field is a work e-mail address, and omits the optional space in the sixth line if the e-mail address in the Email field is a personal e-mail address. The application module 15 generates a seventh line of text that includes an optional SMS footer field (e.g., a predetermined text string including "ABC Mobile").

At stage 345, the application module 15 generates the TP-DU 8010. The application module 15 provides a value in the PID value 8042 that is indicative of the protocol being used by the TP-DU 8010. The application module 15 sets the PID value 8042 to 0x7F to indicate that the message is a binary SMS message. The application module 15 provides a value in the DCS value 8044 that is indicative of how the communication device 20 should handle the message. The application module 15 can set the DCS value 8044 to a value of Ox16 or 0xF6 to indicate that the message is SIM specific (e.g., using the GSM 03.40 standard). The application module 15 provides an address value to the destination address 8046 (e.g., an address assigned to the communication device 20). The application module 15 generates the TP-UD 8060 of the TP-DU 8010, including the STK security header 8067 and the secured data 8065. The application module 15 includes a TAR value 8068 in the STK security header 8067.

The application module 15 generates the TP-UD 8060 of the TP-DU 8010. The application module generates a data string using contact information and preset TLV values stored in the communication device 10. The data string looks like the following:
{TLVMT} {TLVDA} {TLVFN} {TLVLN} {TLVOA} {TLVWN} {TLVHN} {TLVPE} {TLVBE}.
The application module 15 sets the Tag values for each field as follows: The Tag value for MessageType is 01, the Tag value for Destination Address is 02, the Tag value for FirstName is 10 the Tag value for the LastName is 11 the Tag value for the Originating Address is 12, the Tag value for MobileNumber is 14, the Tag value for WorkNumber is 15, the Tag value for HomeNumber is 16, the Tag value for PersonalEmail is 1A, and the Tag value for BusinessEmail is 1B. The appropriate TLV values for each field are coded (e.g., as shown in FIG. 10). For example, the {TLVFN} portion of the string is coded as follows: The application module 15 looks at the Tag value of the FirstName which is equal to 10. The application module 15 reads the FirstName field to determine the Length of the value. The application module 15 codes the Value of the FirstName field. The application module 15 prepares the remainder of the string as in the FirstName example. In each case, the application module 15 codes the value included in the FirstName, LastName, MobileNumber, WorkNumber, HomeNumber, PersonalEmail, and BusinessEmail and inserts the corresponding values into the string next to the Tag and Length codes.

At stage 350, the first user's contact information is transmitted to the second user. The application module 15 causes the first user's information to be transmitted to the service provider 50 (e.g., an SMSC) via the network 60. The service provider 50 converts the received message (i.e., an SMS submit message) into an SMS deliver message for delivery to the second user. For example, the SMSC converts the destination address 5046 into the originating address 6046 (and/or likewise converts the destination address 8046 into the originating address 9046).

Other embodiments are within the scope and spirit of the invention. For example, due to the nature of software, functions described above can be implemented using software, hardware, firmware, hardwiring, or combinations of any of these. Features implementing functions may also be physically located at various positions, including being distributed such that portions of functions are implemented at different physical locations. Furthermore, for example, the process 300 can be configured such that when an unformatted text SMS message is received by the communication device 20, the communication device 20 is configured to send the second user's contact information to the first user using a formatted binary SMS message. Likewise, the process 300 can be configured such that when a formatted binary SMS message is received by the communication device 20, the communication device 20 is configured to send the second user's contact information to the first user using an unformatted text SMS message. The processes 200 and 300 can also be configured in a remote server environment. In this case, an application on the remote server would have a similar process to send SMS messages as that described with respect to the communication devices 10 and 20.

At least one of the communication devices 10 and 20 can be a server configured to generate and send SMS messages to users of other communication devices. For example, the communication device 10 can be a server operated by a department store. The service provider 50 (or another portion of the system 5) can be configured to monitor the contact information sent between users of the communication devices via SMS messages. The service provider 50 can be configured to determine the location of the users based on the contact information provided in the SMS messages. The service provider 50 is configured to provide to the department store information related to users of the communication devices that may be within the geographic location of the department store. The department store (e.g., using a network server) can send SMS messages to users that includes contact information related to the department store (e.g., address, phone number, etc.). The users can be prompted to accept the contact information of the department store and to store the information in the user's communication device.

A "packet" or "message" may be modified by a component and referred to herein (in the description and/or claims) as "the packet" or "the message" both before and after the modification. For example, a "packet" or "message" that is provided by a communication device to a interface point (e.g., a cell-tower) can be modified by intervening components (e.g., a modulator) and still be referred to as "the packet" or "the message" before and after the interface point, and the intervening components.

Further, while the description above refers to the invention, the description may include more than one invention.

Aspects of the invention described herein can be implemented using computer-readable instructions included in a computer program product residing on a computer-readable medium.

## Claims

1. An apparatus comprising:
a communication device including computer readable instructions contained on a computer readable medium configured to cause a processor to send a short message service (SMS) message, wherein the SMS message comprises:
an SMS header portion; and
an information portion comprising at least one contact information field, the contact information fields including:
a last name field;
a first name field;
a mobile number field;
a home number field; and
a work number field;
wherein, if included, the last name field, the first name field, the mobile number field, the home number field, and the work number field are arranged in a predetermined configuration such that another communication device receiving the SMS message can identify a characteristic of the SMS message based on the predetermined configuration.

2. The apparatus of claim 1 wherein the instructions are further configured to cause the communication device to automatically prompt a first user of the communication device to provide contact information related to the first user to a second user of the another communication device, upon completion of a communication event.

3. The apparatus of claim 1 wherein a supplemental character is disposed within the information portion in a predetermined configuration such that the another communication device receiving the SMS message can identify a type of the SMS message based on a configuration of the at least one supplemental character.

4. The apparatus of claim 1 wherein the communication device is configured to insert a supplemental character at a predetermined location within the information portion, the presence of the supplemental character in the information portion being indicative of a characteristic of information included in the information portion.

5. The apparatus of claim 4 wherein the supplemental character is a space character.

6. The apparatus of claim 1 wherein the information portion further includes an e-mail field including information indicative of an e-mail address.

7. The apparatus of claim 1 wherein:
the first name field includes information indicative of a first name;
the last name field includes information indicative of a second name;
the mobile number field includes information indicative of a first telephone number;
the home number field includes information indicative of a second telephone number; and
the work number field includes information indicative of a third telephone number.

8. The apparatus of claim 1 wherein the communication device is a subscriber identity module (SIM).

9. The apparatus of claim 1 wherein the communication device is a network server.

10. The apparatus of claim 1 wherein the information portion further includes
a mobile number prefix field;
a home number prefix field;
a work number prefix field; and
an e-mail field;
wherein
the last name field is followed by a comma followed by the first name field, followed by a break indicator;
the mobile number prefix field is followed by a colon followed by the mobile number field followed by the break indicator;
the home number prefix field is followed by the colon followed by the home number field, followed by the break indicator;
the work number prefix field is followed by the colon followed by the work number field, followed by the break indicator; and
the e-mail field is followed by the break indicator.

11. The apparatus of claim 10 wherein the SMS header portion comprises:
a protocol identifier field;
a data coding scheme field; and
a destination address field.

12. The apparatus of claim 10, wherein the information portion includes a space character between the first name field and the break indicator.

13. The apparatus of claim 10, wherein the information portion includes a space character between the mobile number field and the break indicator.

14. The apparatus of claim 10, wherein the information portion includes a space character between the e-mail field and the break indicator.

15. The apparatus of claim 10 wherein the break indicator is a new line indicator.

16. The apparatus of claim 1 wherein the last name field, first name field, mobile number field, home number field, and work number field, if included in the information portion, are represented by a tag information field including information indicative of a type of contact information included in the respective contact information fields, a length information field including information indicative of a length of contact information included in the respective contact information fields, and a value information field including information indicative of a value of the contact information included in the respective contact information fields.

17. The apparatus of claim 16 wherein the instructions are further configured to cause the communication device to automatically prompt a first user of the communication device to provide contact information related to the first user to a second user of the another communication device, upon completion of a communication event.

18. The apparatus of claim 16 wherein the information portion further includes a toolkit application reference (TAR) value.

19. The apparatus of claim 18 wherein the TAR value includes information indicative of an identity of the communication device.

20. The apparatus of claim 18 wherein the TAR value includes information indicative of a type of the SMS message.

21. The apparatus of claim 16 wherein the communication device is a subscriber identity module (SIM).

22. The apparatus of claim 16 wherein the communication device is a network server.
